(19) **Europäisches Patentamt / European Patent Office / Office européen des brevets**

(11) **EP 1 345 415 B1**

(12) **EUROPEAN PATENT SPECIFICATION**

(45) Date of publication and mention
of the grant of the patent:
**14.12.2011 Bulletin 2011/50**

(51) Int Cl.:
***H04N 1/60*** (2006.01)

(21) Application number: **03001303.1**

(22) Date of filing: **22.01.2003**

(54) **Color signal processing device capable of storing a color gamut**

Farbsignalverarbeitungsvorrichtung mit Speicherung des Tonumfanges der Farbe

Appareil de traitement de signal en couleur avec l'enregistrement de la gamme de couleurs

(84) Designated Contracting States:
**DE GB NL**

(30) Priority: **13.03.2002 KR 2002013582**

(43) Date of publication of application:
**17.09.2003 Bulletin 2003/38**

(73) Proprietor: **SAMSUNG ELECTRONICS CO., LTD.
Suwon-City, Kyungki-do (KR)**

(72) Inventors:
• **Kim, Moon-cheol
Giheung-eub,
Yongin-city,
Gyunggi-do (KR)**

• **Oh, Jae-hwan
Suwon-city,
Gyunggi-do (KR)**
• **Yang, Seung-joon,
301-1204, Daewoo Apartment
Paldal-gu,
Suwon-city,
Gyunggi-do (KR)**

(74) Representative: **Grünecker, Kinkeldey,
Stockmair & Schwanhäusser
Leopoldstrasse 4
80802 München (DE)**

(56) References cited:
**EP-A- 0 961 488     EP-A- 1 022 897
US-A- 5 510 910**

**Description**

This application claims the priority of Korean Patent Application No. 2002-13582, filed March 13, 2002 in the Korean Intellectual Property Office.

The present invention generally relates to an apparatus to process a color signal input to a display and a method using the same, and more particularly, to an apparatus to process a color signal capable of efficiently storing a color gamut for color signal processing and using the stored color gamut, and a method using the same.

Generally, a color of an object shown as a result of light permeation, absorption, or reflection is generally called a "substantial color ". The substantial color is categorized into an achromatic color such as white, gray, and black, and a chromatic color such as red and blue.

Meanwhile, white is bright, black is dark, and gray is in the middle, which is due to brightness of each color. The brightness of each color is a measure of an intensity of a reflection light from the object and is represented in measurable units. The chromatic colors also have the brightness for example, melon yellow is bright and grape purple is dark.

Feelings that a human perceives about the reflected lights of various waves reflected from an object, i.e., in colors such as red, yellow, green, blue and purple, can be defined as "hue". For example, waves between 430 and 480 nm are perceived somewhat bluish. Yellowish feelings are perceived in ranges between 570 and 600 nm, while the waves above 610nm are felt as reddish. Achromatic colors such as black, gray, and white do have color, but cannot be said to have the hue.

The concentration of the color, i.e., the degree of non-dilution by white, is called "chroma." Chroma usually shows the purity of color. A color of low chroma is expressed dim and vague, while the color of a high chroma is represented clear and lively. While the chromatic colors have hue, brightness, and chroma, the achromatic colors are somewhat different. That is, the achromatic colors have brightness, but they do not have hue and chroma.

A method to express a relation of a certain color with respect to other colors is called a color space (or, color model). Different image processing systems use different color models for different reasons. For example, a publishing company uses a CMY color space for publication of color pictures. A color cathode ray tube (CRT) monitor and computer graph systems use an RGB color space. Systems dealing with each of the hue, chroma, and brightness use an HIS color space. For the JPEG file interchange format, a YCbCr color space is used.

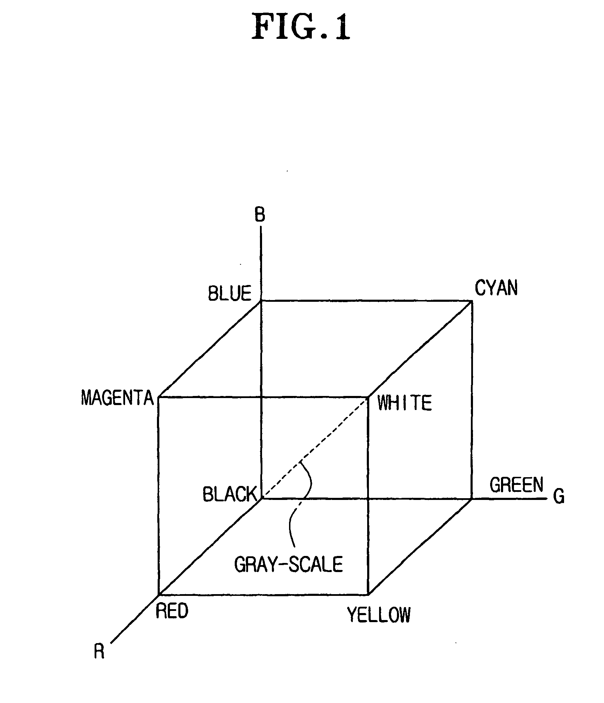

The RGB color space includes three primary colors combinable with one another, i.e., red, green, and blue. The primary colors are combined with one another in various proportion, resulting in different colors. As shown in FIG. 1, the RGB color space is represented as a 3-dimensional cube having vertices at respective axes for red, green, and blue. Here, black color is origin. White color is at an opposite end of the black color. Brightness is represented as the line starting from the black to the white. In the 24-bit color graphic system having 8 bits for each color channel, red color is expressed by (255, 0, 0). On the color cube, the red is expressed as (1, 0, 0).

YCbCr is another color space to particularly show the brightness among the color information. The brightness is symbolized as Y, and the blue color information and red color information are symbolized as CbCr. Y denotes the brightness information, while Cb and Cr denote a color scale. RGB is converted into YCbCr by the following expression:

**(Mathematical Expression 1)**

$$Y = 0.29900R + 0.58700G + 0.11400B$$
$$Cb = -0.16874R - 0.33126G + 0.50000B$$
$$24Cr = 0.50000R - 0.41869G - 0.08131B$$

An inverse conversion, i.e., conversion from YCbCr into RGB is expressed by the following expression:

**(Mathematical Expression 2)**

$$R = 1.00000Y + 1.40200Cr$$
$$G = 1.00000Y - 0.34414Cb - 0.71414Cr$$
$$B = 1.00000Y + 1.77200Cb$$

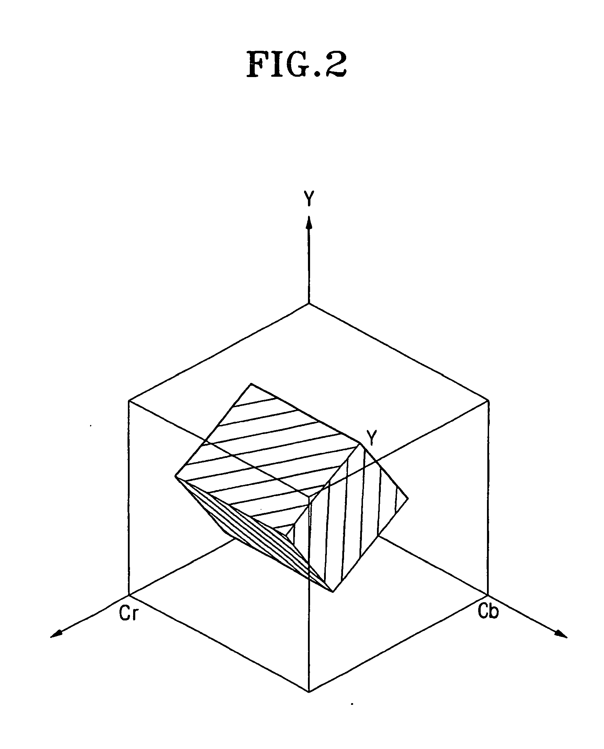

FIG. 2 shows the color gamut of the colors of the RGB color space being expressed in the YCbCr space after the conversions by the above mathematical expressions 1 and 2.

Both mathematical expressions 1 and 2 are recommendations 601-1 by the International Radio Consultative Committee (CCIR), and typically used in the Joint Photographic Experts Group (JPEG) compression. In addition to the mathematical expressions 1 and 2, various conversions are also available.

A digital component converts and expresses the incoming RGB color signals as YCbCr color signals. Further, after digital signal processing, the YCbCr color signals are converted and displayed as RGB color signals on a display.

During a digital signal processing for color signal conversion from RGB to YCbCr, sometimes the colors, after the conversion, cannot be shown in the RGB color space. Accordingly, the processed color signal can be inordinate of the color gamut shown by the display.

US 5 510 910 A relates to coping with divergent color gamuts of color presenting devices, when color specifications developed with one device are used to control color presentation on another device. It is described that a desired image output hue h from an hSAT table passes directly to a conversion block for translation to another machine used space. The hSAT table contains for each of forty-two input perceptual hues H, in addition to the corresponding h data, both chroma Csat and value Vsat data for the maximum-saturation (maximum-chroma) point. An interpolation in the hue direction and a scaling for chroma and value is suggested.

SUMMARY OF THE INVENTION

The present invention defined by independent claims 1 and 6. The dependent claims define further optional features and aspects.

Various aspects and advantages of the invention will be set forth in part in the description that follows and, in part, will be obvious from the description, or may be learned by practice of the invention.

Accordingly, according to an aspect of the present invention, there is provided a color signal processing apparatus capable of efficiently storing information about a color gamut and using the stored color gamut such that a result of digital signal processing with respect to color signals can be represented in an expressible color gamut, and a method of using the same.

According to an aspect of the present invention, a color signal processing device, includes a calculating unit calculating brightness, chroma, and hue of an input RGB color signal; a coordinate storing unit storing a predetermined coordinate including the brightness and the chroma with respect to a color categorized in accordance with a predetermined level; a color gamut determining unit determining a color gamut to display the input RGB color signal; and a signal processing unit digitizing the input RGB color signal within the determined color gamut. The color gamut determining unit extracts from the coordinate storing unit a coordinate corresponding to a calculated color, and determines a range of displayable brightness and chroma based on the calculated brightness and the chroma, and the extracted coordinate. The signal processing unit digitizes the input RGB color signal when the input RGB color signal exists within the color gamut determined by the color gamut determining unit.

The calculating unit calculates the chroma and the hue by,

$$C = \sqrt{Cb^2 + Cr^2}$$

$$H = \tan^{-1} \frac{Cb}{Cr}$$

where, C is the chroma, Cb is a color scale representing a green color, Cr is a color scale representing a reddish color, and H is the hue.

The color gamut determining unit determines a maximum chroma with respect to a triangle that is constructed using the coordinate extracted from the coordinate storing unit and an axis of the brightness representing a shift of the brightness, by,

$$Y : Y_{pos} = C_{max} : C_{pos} \qquad (for \ Y \leq Y_{pos})$$

$$(255 - Y) : (255 - Y_{pos}) = C_{max} : C_{pos} \qquad (for \ Y > Y_{pos})$$

$Y_{pos}$ is a brightness value of the coordinate, Y is the brightness of the input RGB color signal, $C_{pos}$ is a chroma

value of the coordinate, and $C_{max}$ is a maximum chroma that is raised to a range that maintains the brightness and the hue of the input RGB color signal.

The color gamut determining unit determines the range of the brightness with respect to a triangle that is constructed using the coordinate extracted from the coordinate storing unit and the axis of the brightness representing a shift of the brightness, by,

$$Y_{\min} : Y_{pos} = C : C_{pos}$$
$$(255 - Y_{\max}) : (255 - Y_{pos}) = C : C_{pos}$$

$Y_{pos}$ is the brightness value of the coordinate, Y is the brightness of the input RGB color signal, C is the chroma of the RGB color signal, $Y_{min}$ is a minimum brightness that is lowered within a range that maintains the hue and the chroma of the input RGB color signal, and $Y_{max}$ is a maximum brightness that is raised within the range that maintains the hue and the chroma of the input RGB color signal.

According to an aspect of the present invention, there is provided a color signal processing device, including a calculating unit calculating brightness, chroma, and hue of an input color signal; and a coordinate storing unit storing a coordinate of vertices of a triangle, which is constructed by a maximum chroma and an axis of the brightness for each color categorized in accordance with a predetermined level, wherein the maximum chroma is raised within a range to maintain the brightness and the hue of the input color signal and the axis of the brightness represents a shift of the brightness.

Accordingly, as the displayable color gamut is correctly selected for the input RGB color signal, the information about color gamut can be utilized in a process of digital signal processing, and a result obtained after the processing is prevented from exceeding the displayable color gamut.

Meanwhile, according to an aspect of the present invention, a color signal processing method is provided, which includes: calculating brightness, chroma, and hue of an input RGB color signal; retrieving a coordinate corresponding to the calculated hue; determining a displayable color gamut based on the extracted coordinate and the calculated brightness and the chroma; displaying the input RGB color signal; and digitizing the input RGB color signal within the determined color gamut. The retrieving of the coordinate extracts the coordinate corresponding to the calculated hue, and determines a displayable range of the brightness and the chroma based on the calculated brightness and the chroma and the extracted coordinate.

According to an aspect of the present invention, there is provided a coordinate corresponding to a calculated hue, and determining the range of displayable brightness and chroma based on a calculated brightness and chroma. As a result, a color gamut to process a color signal can be efficiently stored and utilized.

According to an aspect of the present invention, there is provided a color signal processing method including calculating brightness, chroma, and hue of an input color signal; and storing a coordinate of vertices of a triangle, which is constructed by a maximum chroma and an axis of the brightness for each color categorized in accordance with a predetermined level, wherein the maximum chroma can be raised within a range that maintains the brightness and the hue of the input color signal, and the axis of the brightness represents a shift of the brightness.

BRIEF DESCRIPTION OF THE DRAWINGS

(The above-mentioned object and the feature of the present invention will be more apparent by describing the preferred embodiment of the present invention by referring to the appended drawings, in which) These and other aspects and/or advantages of the invention will become apparent and more readily appreciated from the following description of the embodiments, taken in conjunction with the accompanying drawings of which:

FIG. 1 is a view showing an RGB color space;
FIG. 2 is a view showing a color gamut of the RGB color space being represented in a YCbCr color space;
FIG. 3 is a view showing a projection of the color gamut of FIG. 2 in a CbCr color space;
FIG. 4 is a block diagram schematically showing a color signal processing device, according to an aspect of the present invention;
FIG. 5 is a flowchart showing a color signal processing by the color signal processing device of FIG. 4;
FIG. 6 is a view showing a method of determining the color gamut according to a hue;
FIG. 7 is a view showing a method of determining the color gamut according to a certain hue of FIG. 6;
FIG. 8 is a view showing an example of a method of obtaining a range of chroma;
FIG. 9 is a view showing an example of a method of obtaining a range of brightness; and

FIG. 10 is a view showing another example of a method of obtaining a range of the chroma.

DETAILED DESCRIPTION OF THE PREFERRED EMBODIMENT

Reference will now be made in detail to the embodiments of the present invention, examples of which are illustrated in the accompanying drawings, wherein like reference numerals refer to like elements throughout. The embodiments are described below in order to explain the present invention by referring to the figures.

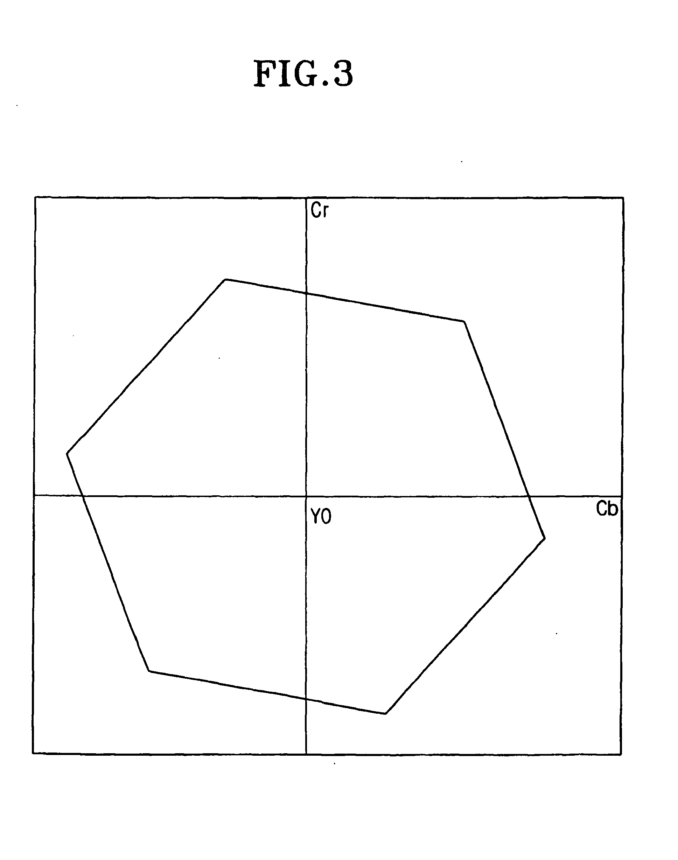

FIG. 3 shows a projection of FIG. 2 into a CbCr color space. According to an aspect of the present invention, a color gamut of a YCbCr color space is expressed in the CbCr color space with Y=0. The CbCr color space is expressed as a polar coordinate system as shown in the following mathematical expression 3.

### (Mathematical Expression 3)

$$C = \sqrt{Cb^2 + Cr^2}$$

$$H = \tan^{-1} \frac{Cb}{Cr}$$

A color space expressed by the mathematical expression 3 is a YCH color space. It is possible to convert and express the color gamut of the YCbCr color space in the YCH color space.

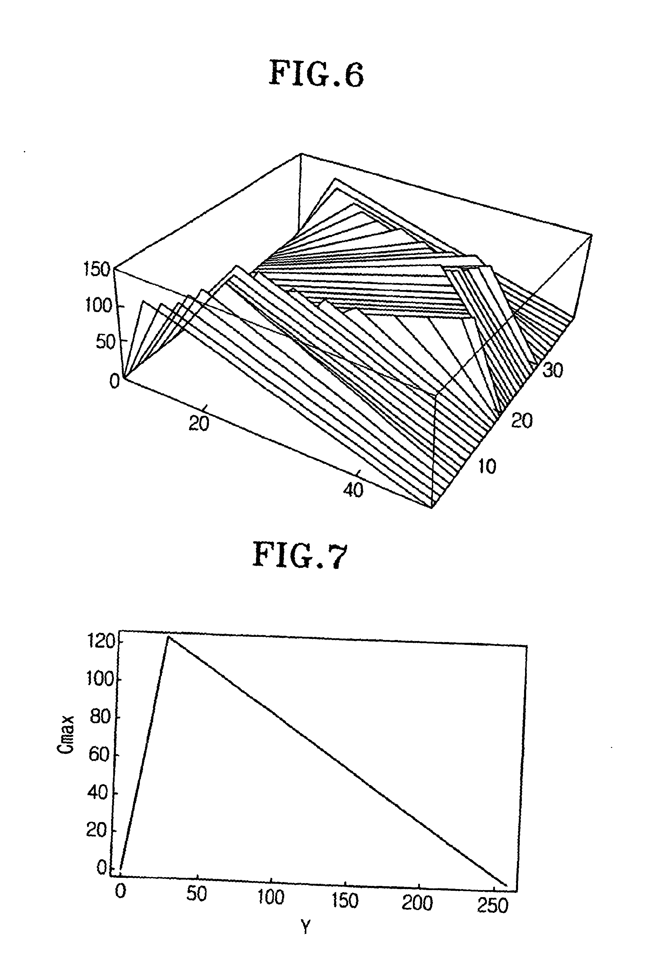

FIG. 6 shows Y and C values included in the color gamut, which can be processed in accordance with a respective hue. Re-drawing of the Y and C values in accordance with a color value H is shown in FIG. 7.

As shown in FIG. 7, with a single hue H, the values Y and C in the color gamut are located inside of a single triangle. Accordingly, the color gamut of a given value, i.e., the color value of the single hue H, can be calculated using vertex values of the triangle.

Therefore, when storing color gamut information, three vertices can be stored instead of the entire color gamut. Further, because one (Y=0, $C_{max}$=0) and the other vertex (Y=255, $C_{max}$=0) of the triangle are common, only a last vertex can be stored. The last vertex may be denoted as (Y= $Y_{pos}$, C= $C_{pos}$). Simply by storing the vertex value of ($Y_{pos}$ (H), $C_{pos}$ (H)) in accordance with the given color value of the single hue H, the color gamut information can be obtained.

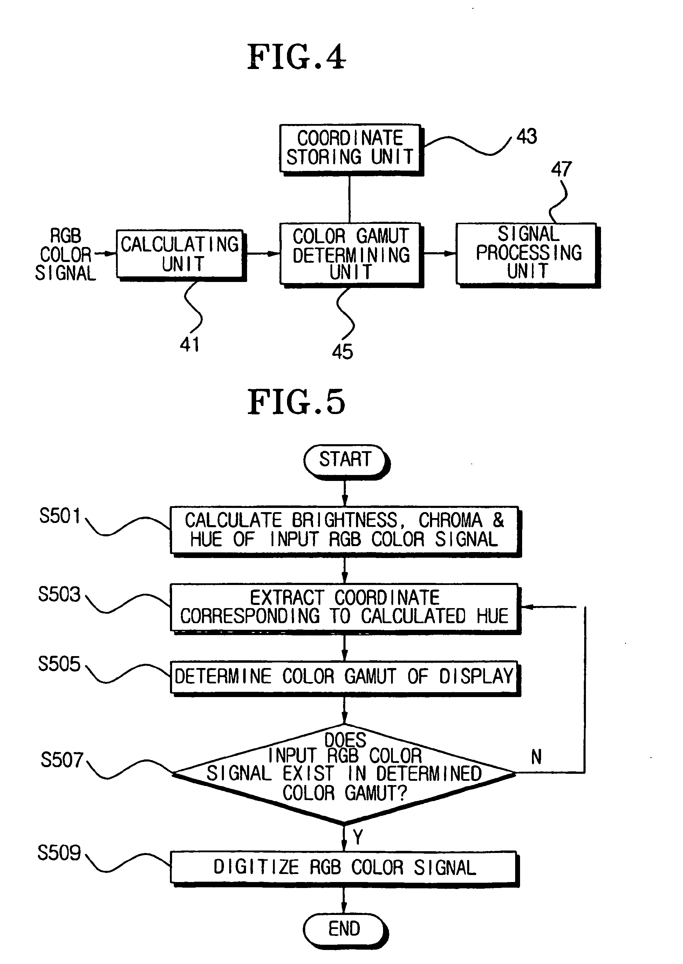

FIG. 4 is a block diagram schematically showing a color signal processing device, according to an aspect of the present invention. Referring to FIG. 4, the color signal processing device includes a calculating unit 41, a coordinate storing unit 43, a color gamut determining unit 45 and a signal processing unit 47.

The calculating unit 41 calculates brightness, chroma, and hue corresponding to an input RGB color signal. Brightness Y corresponding to the input RGB color signal can be obtained by $Y = 0.29900R + 0.58700G + 0.11400B$ as shown in the mathematical expression 1 in the Background of the Invention section. Further, the chroma C and the hue H can be calculated by the mathematical expression 3, based on bluish information Cb and reddish information Cr obtained by the mathematical expression 1.

The coordinate storing unit 43 stores a coordinate value including the brightness and the chroma of each color categorized according to predetermined levels, namely, the value ($Y_{pos}$ (H), $C_{pos}$ (H)).

The color gamut determining unit 45 determines the color gamut of a display (not shown) that displays the input RGB color signals. The color gamut determining unit 45 extracts from the coordinate storing unit 43 the coordinate corresponding to a calculated color by the calculating unit 41, and determines a displayable range of the brightness and the chroma of the display based on the extracted coordinate and the brightness and the chroma calculated by the calculating unit 41.

The signal processing unit 47 digitizes the input RGB color signals within the color gamut determined by the color gamut determining unit 45, and converts and outputs the digitalized color signals on the display as the RGB color signals.

FIG. 5 is a flowchart showing a method of color signal processing of FIG. 4. Referring to FIG. 5, at operation S501, the calculating unit 41 calculates the brightness, the chroma, and the hue of the input RGB color signals using mathematical expressions 1 and 3. The calculated brightness, the chroma and the hue of the RGB color signals are transmitted to the color gamut determining unit 45.

At operation S503, the color gamut determining unit 45 extracts from the coordinate storing unit 43 coordinates corresponding to the brightness, the chroma, and the hue calculated by the calculating unit 41. The coordinate storing unit 43 stores the coordinates including the brightness and the chroma of each color that is categorized in accordance with an angle at predetermined intervals. The respective coordinate values stored in the coordinate storing unit 43 construct a single triangle in cooperation with the axis of brightness. An axis of the brightness represents shifts of the brightness. FIG. 6 shows triangles constructed using the method of FIG. 5.

FIG. 7 representatively shows such a triangle. Although FIG. 6 shows the single coordinate corresponding to each hue by way of an example, this must not be considered as limiting. For example, the coordinate storing unit 43 can store a plurality of coordinates corresponding to each hue.

At operation S505, the color gamut determining unit 45 determines the color gamut of the display based on the triangle (see FIG. 7) formed by the extracted coordinates and the axis of the brightness.

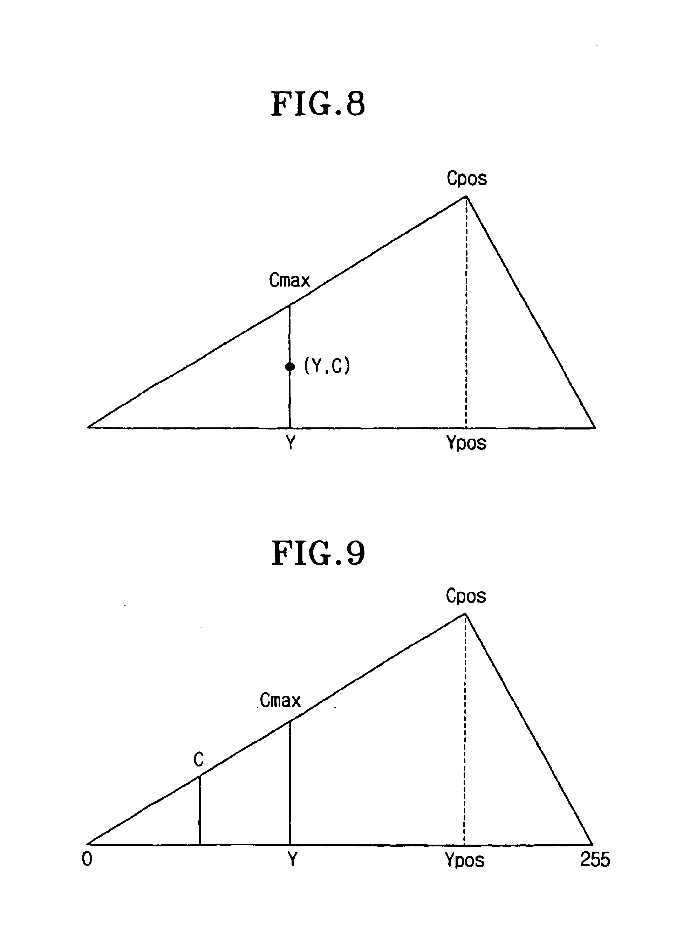

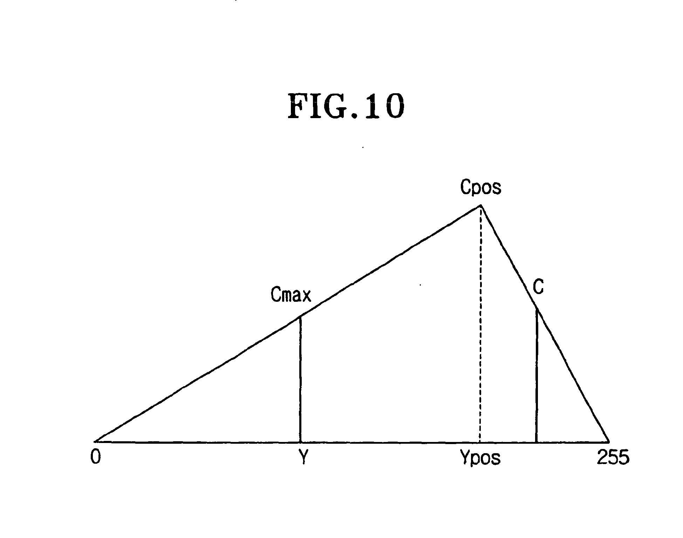

FIGS. 8 through 10 show a method of determining the color gamut of the display based on the triangle formed by the extracted coordinates and the axis of the brightness. Referring to the drawings, a maximum chroma with respect to the triangle formed by the cooperation of the coordinates from the coordinate storing unit 43 and the axis of the brightness is determined by the following expression:

### (Mathematical Expression 4)

$$Y : Y_{pos} = C_{max} : C_{pos} \qquad (for \ Y \le Y_{pos})$$
$$(255 - Y) : (255 - Y_{pos}) = C_{max} : C_{pos} \qquad (for \ Y > Y_{pos})$$

Where $C_{pos}$ is the chroma value of the coordinate, and $C_{max}$ is the maximum chroma within a range that maintains the brightness and the hue of the input RGB color signal. Because a minimum chroma value begins from "0" according to an aspect of the present invention, only the maximum chroma value needs to be obtained.

With respect to the triangle formed by the coordinates extracted from the coordinate storing unit 43 and the axis of brightness, the range of brightness can be determined by,

### (Mathematical expression 5)

$$Y_{min} : Y_{pos} = C : C_{pos}$$
$$(255 - Y_{max}) : (255 - Y_{pos}) = C : C_{pos}$$

where, $Y_{pos}$ is the brightness value of the coordinate, Y is the brightness of the input RGB color signal, C is the chroma of the RGB color signal, $Y_{min}$ is the minimum brightness that can be lowered within the range that maintains the hue and the chroma of the RGB color signal, and $Y_{max}$ is the maximum brightness that can be raised within the range that maintains the hue and the chroma of the input RGB color signal.

At operation S507, the color gamut determining unit 45 determines whether the coordinate of the brightness and the chroma of the input RGB color signal exists within the determined color gamut. If the coordinate of the brightness and the chroma of the input RGB color signal does not exist within the determined color gamut, the color gamut determining unit 45 extracts a new coordinate from the coordinate storing unit 43, and repeats the method thereafter.

If the coordinate of the brightness and the chroma of the input RGB color signal exists within the determined color gamut, the color gamut determining unit 45 transmits the determined display color gamut to the signal processing unit 47. At operation S509, the signal processing unit 47 digitizes the input RGB color signals in accordance with the color gamut received from the color gamut determining unit 45.

As described above, the color signal processing device only needs to store a predetermined coordinate to determine the display color gamut. Accordingly, an amount of memory capacity is greatly reduced.

With a color signal processing device, according to an aspect of the present invention, a storage capacity of a memory to store a color gamut is less than the storage capacity required by conventional memory units, and information about the color gamut is used in color signal processing. Further, the information about the color gamut can be used to prevent a result of color signal processing from exceeding a displayable color gamut.

The many features and advantages of the invention are apparent from the detailed specification and, thus, it is intended by the appended claims to cover all such features and advantages of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention as defined by the appended claims.

**Claims**

1. A color signal processing device, comprising:

   a calculating unit (41) calculating brightness, chroma, and hue of an input RGB color signal, comprising converting the input RGB color signal to the YCbCr color space and calculating chroma and hue from the Cb and Cr values;
   a coordinate storing unit (43) storing for each of a plurality of predetermined levels of hue H the coordinates of a vertex representing for the respective hue H a maximum chroma Cpos(H) and a corresponding brightness Ypos(H) of a display color gamut;
   a determining unit (45), wherein the determining unit extracts from the coordinate storing unit the coordinates of a vertex corresponding to the calculated hue, and determines a range of displayable brightness at the calculated chroma based on the extracted coordinates, and a range of displayable chroma at the calculated brightness based on the extracted coordinates, and determines whether the calculated chroma and brightness of the input RGB signals are within the displayable ranges,
   wherein further the determining unit (45) extracts a new coordinate corresponding to the calculated hue if the calculated brightness and the calculated chroma of the input RGB color signal are not within the determined ranges, and extracts a new coordinate until the calculated brightness and the calculated chroma of the input RGB color signal are within the determined ranges; and
   a signal processing unit (47) digitizing the input RGB color signal for display within the determined ranges.

2. The color signal processing device of claim 1, wherein the calculating unit calculates the chroma and the hue by,

$$C = \sqrt{Cb^2 + Cr^2}$$

$$H = \tan^{-1} \frac{Cb}{Cr}$$

   where, C is the chroma, Cb is a color scale representing a green color, Cr is a color scale representing a reddish color, and H is the hue.

3. The color signal processing device of claim 2, wherein the determining unit determines the range of displayable chroma by determining a maximum chroma with respect to a triangle that is constructed using the coordinates extracted from the coordinate storing unit and an axis of the brightness representing a shift of the brightness, by,

$$Y : Y_{pos} = C_{max} : C_{pos} \qquad (for \ \ Y \le Y_{pos})$$
$$(255 - Y) : (255 - Y_{pos}) = C_{max} : C_{pos} \qquad (for \ \ Y > Y_{pos})$$

   where, Ypos is a brightness value of the coordinate, Y is the brightness of the input RGB color signal, Cpos is a chroma value of the coordinate, and Cmax is a maximum chroma that is raised to a range that maintains the brightness and the hue of the input RGB color signal.

4. The color signal processing device of claim 2, wherein the determining unit determines the range of displayable brightness with respect to a triangle that is constructed using the coordinates extracted from the coordinate storing unit and an axis of the brightness representing a shift of the brightness, by,

$$Y_{min} : Y_{pos} = C : C_{pos}$$
$$(255 - Y_{max}) : (255 - Y_{pos}) = C : C_{pos}$$

   where, Ypos is a brightness value of the coordinate, C is the chroma of the input RGB color signal, Ymin is a minimum brightness that is lowered within a range that maintains the hue and the chroma of the input RGB color signal, and Ymax is a maximum brightness that is raised within the range that maintains the hue and the chroma of the input RGB color signal.

**5.** The color signal processing device of claim 1, wherein the calculating unit calculates the brightness corresponding to the input RGB color signal by a following relationship:

$$Y = 0.29900R + 0.58700G + 0.11400B.$$

**6.** A color signal processing method, comprising:

calculating (S501) brightness, chroma; and hue of an input RGB color signal, comprising converting the input RGB color signal to the YCbCr color space and calculating chroma and hue from the Cb and Cr values;
storing for each of a plurality of predetermined levels of hue H the coordinates of a vertex representing for the respective hue H a maximum chroma Cpos(H) and a corresponding brightness Ypos(H) of a display color gamut;
retrieving (S503) the coordinates of a vertex corresponding to the calculated hue;
determining (S505) a range of displayable brightness at the calculated chroma based on the extracted coordinates, and a range of displayable chroma at the calculated brightness based on the extracted coordinates, and determining (S507) whether the calculated chroma and brightness of the input RGB signals are within the displayable ranges;
extracting a new coordinate corresponding, to the calculated hue if the calculated brightness and the calculated chroma of the input RGB color signal are not within the determined ranges, and extracting a new coordinate until the calculated brightness and
the calculated chroma of the input RGB color signal are within the determined ranges;
and
digitizing (S509) the input RGB color signal for display within the determined ranges.

**7.** The color signal processing method of claim 6, wherein the chroma and the hue are calculated using,

$$C = \sqrt{Cb^2 + Cr^2}$$

$$H = \tan^{-1}\frac{Cb}{Cr}$$

where, C is the chroma, Cb is a color scale representing green rolor, Cr is a color scale representing a reddish color, and H is the hue.

**8.** The color signal processing method of claim 7, further comprising.
determining the range of displayable chroma by determining a maximum chroma with respect to a triangle that is constructed using the coordinates extracted and an axis of the brightness representing the shift of the brightness, by,

$$Y \quad : Y_{pos} = C_{max} : C_{pos} \qquad (for \quad Y \le Y_{pos})$$
$$(255 - Y \quad ):(255 - Y_{pos}) = C_{max} : C_{pos} \qquad (for \quad Y > Y_{pos})$$

where, Ypos is a brightness value of the coordinate, Y is the brightness of the input RGB color signal, Cpos is a chroma value of the coordinate, and Cmax is a maximum chroma that is raised to a range that maintains the brightness and the hue of the input RGB color signal.

**9.** The color signal processing method of claim 7, further comprising:

determining the range of displayable brightness with respect to a triangle that is constructed using the coordinates extracted from the coordinate storing unit and an axis of the brightness representing a shift of the brightness, by,

$$Y_{min} : Y_{pos} = C : C_{pos}$$
$$(255 - Y_{max}) : (255 - Y_{pos}) = C : C_{pos}$$

where, Ypos is a brightness value of the coordinate, C is the chroma of the RGB color signal, Ymin is a minimum brightness that is lowered within the range that maintains the hue and the chroma of the input RGB color signal, and Ymax is a maximum brightness that is raised within the range that maintains the hue and the chroma of the Input RGB color signal.

## Patentansprüche

1. Farbsignal-Verarbeitungsvorrichtung, die umfasst:

eine Berechnungseinheit (41), die Helligkeit, Sättigung und Farbton eines Eingangs-RGB-Farbsignals berechnet, wobei dies Umwandeln des Eingangs-RGB-Farbsignals in den YCbCr-Farbraum und Berechnen von Sättigung sowie Farbton aus den Cb- und Cr-Werten einschließt;
eine Koordinaten-Speichereinheit (43), die für jede einer Vielzahl vorgegebener Stufen des Farbtons H die Koordinaten eines Vertex speichert, der für den jeweiligen Farbton H eine maximale Sättigung Cpos(H) und eine entsprechende Helligkeit Ypos(H) eines Anzeige-Farbbereiches repräsentiert;
eine Bestimmungseinheit (45), wobei die Bestimmungseinheit aus der Koordinaten-Speichereinheit die Koordinaten eines Vertex extrahiert, der dem berechneten Farbton entspricht, und einen Bereich anzeigbarer Helligkeit bei der berechneten Sättigung auf Basis der extrahierten Koordinaten sowie einen Bereich anzeigbarer Sättigung bei der berechneten Helligkeit auf Basis der extrahierten Koordinaten bestimmt und bestimmt, ob die berechnete Sättigung und Helligkeit der Eingangs-RGB-Signale innerhalb der anzeigbaren Bereiche liegen;
wobei die Bestimmungseinheit (45) des Weiteren eine neue Koordinate extrahiert, die dem berechneten Farbton entspricht, wenn die berechnete Helligkeit und die berechnete Sättigung des Eingangs-RGB-Farbsignals nicht innerhalb der bestimmten Bereiche liegen, und eine neue Koordinate extrahiert, bis die berechnete Helligkeit und die berechnete Sättigung des Eingangs-RGB-Farbsignals innerhalb der bestimmten Bereiche liegen; und
eine Signalverarbeitungseinheit (47), die das Eingangs-RGB-Farbsignal zur Anzeige innerhalb der bestimmten Bereiche digitalisiert.

2. Farbsignal-Verarbeitungsvorrichtung nach Anspruch 1, wobei die Berechnungseinheit die Sättigung und den Farbton mittels

$$C = \sqrt{Cb^2 + Cr^2}$$

$$H = tan^{-1} \frac{Cb}{Cr}$$

berechnet, und dabei C die Sättigung ist, Cb eine Farbskala ist, die eine grüne Farbe repräsentiert, Cr eine Farbskala ist, die eine rötliche Farbe repräsentiert, und H der Farbton ist.

3. Farbsignal-Verarbeitungsvorrichtung nach Anspruch 2, wobei die Bestimmungseinheit den Bereich anzeigbarer Sättigung bestimmt, indem sie eine maximale Sättigung in Bezug auf ein Dreieck, das unter Verwendung der aus der Koordinaten-Speichereinheit extrahierten Koordinaten und einer Achse der Helligkeit konstruiert wird, die eine Verschiebung der Helligkeit repräsentiert, mittels

$$Y : Y_{pos} = C_{max} : C_{pos} \qquad (für \ \ Y \leq Y_{pos})$$
$$(255 - Y) : (255 - Y_{pos}) = C_{max} : C_{pos} \qquad (für \ \ Y > Y_{pos})$$

bestimmt, und dabei Ypos ein Helligkeitswert der Koordinate ist, Y die Helligkeit des Eingangs-RGB-Farbsignals ist, Cpos ein Sättigungswert der Koordinate ist und Cmax eine maximale Sättigung ist, die in einen Bereich angehoben ist, in dem die Helligkeit und der Farbton des Eingangs-RGB-Farbsignals aufrechterhalten werden.

4. Farbsignal-Verarbeitungsvorrichtung nach Anspruch 2, wobei die Bestimmungseinheit den Bereich anzeigbarer Helligkeit in Bezug auf ein Dreieck, das unter Verwendung der aus der Koordinaten-Speichereinheit extrahieren Koordinaten und einer Achse der Helligkeit konstruiert wird, die eine Verschiebung der Helligkeit repräsentiert, mittels

$$Y_{min} : Y_{pos} = C : C_{pos}$$
$$(255 - Y_{max}) : (255 - Y_{pos}) = C : C_{pos}$$

bestimmt, und dabei Ypos ein Helligkeitswert der Koordinate ist, C die Sättigung des Eingangs-RGB-Farbsignals ist, Ymin eine minimale Helligkeit ist, die innerhalb eines Bereiches abgesenkt ist, in dem der Farbton und die Sättigung des Eingangs-RGB-Farbsignals aufrechterhalten werden, und Ymax eine maximale Helligkeit ist, die innerhalb des Bereiches erhöht ist, in dem der Farbton und die Sättigung des Eingangs-RGB-Farbsignals aufrechterhalten werden.

5. Farbsignal-Verarbeitungsvorrichtung nach Anspruch 1, wobei die Berechnungseinheit die Helligkeit, die dem Eingangs-RGB-Farbsignal entspricht, mittels der folgenden Beziehung berechnet:

$$Y = 0.29900\,R + 0.58700\,G + 0.11400\,B\,.$$

6. Farbsignal-Verarbeitungsverfahren, das umfasst:

Berechnen (S501) von Helligkeit, Sättigung und Farbton eines Eingangs-RGB-Farbsignals, wobei dies Umwandeln des Eingangs-RGB-Farbsignals in den YCbCr-Farbraum und Berechnen von Sättigung sowie Farbton aus den Cb- und Cr-Werten umfasst,
Speichern der Koordinaten eines Vertex, der für den jeweiligen Farbton H eine maximale Sättigung Cpos(H) und eine entsprechende Helligkeit Ypos(H) eines Anzeige-Farbbereiches repräsentiert, für jede einer Vielzahl vorgegebener Stufen des Farbtons H;
Abrufen (S503) der Koordinaten eines Vertex, der dem berechneten Farbton entspricht;
Bestimmen (S505) eines Bereiches anzeigbarer Helligkeit bei der berechneten Sättigung auf Basis der extrahierten Koordinaten und eines Bereiches anzeigbarer Sättigung bei der berechneten Helligkeit auf Basis der extrahierten Koordinaten sowie Bestimmen (S507), ob die berechnete Sättigung und Helligkeit der Eingangs-RGB-Signale innerhalb der anzeigbaren Bereiche liegen;
Extrahieren einer neuen Koordinate, die dem berechneten Farbton entspricht, wenn die berechnete Helligkeit und die berechnete Sättigung des Eingangs-RGB-Farbsignals nicht innerhalb der bestimmten Bereiche liegen, und Extrahieren einer neuen Koordinate, bis die berechnete Helligkeit und die berechnete Sättigung des Eingangs-RGB-Farbsignals innerhalb der bestimmten Bereiche liegen; und
Digitalisieren (S509) des Eingangs-RGB-Farbsignals zur Anzeige innerhalb der bestimmten Bereiche.

7. Farbsignal-Verarbeitungsverfahren nach Anspruch 6, wobei die Sättigung und der Farbton unter Verwendung von

$$C = \sqrt{Cb^2 + Cr^2}$$
$$H = tan^{-1}\frac{Cb}{Cr}$$

berechnet werden, und dabei C die Sättigung ist, Cb eine Farbskala ist, die eine grüne Farbe repräsentiert, Cr eine Farbskala ist, die eine rötliche Farbe repräsentiert, und H der Farbton ist.

8. Farbsignal-Verarbeitungsverfahren nach Anspruch 7, das des Weiteren umfasst:

Bestimmen des Bereiches anzeigbarer Sättigung durch Bestimmen einer maximalen Sättigung in Bezug auf ein Dreieck, das unter Verwendung der extrahierten Koordinaten und einer Achse der Helligkeit konstruiert wird, die die Verschiebung der Helligkeit repräsentiert, mittels

$$Y \quad : Y_{pos} = C_{\max} : C_{pos} \qquad (\textit{für} \quad Y \le Y_{pos})$$
$$(255 - Y) : (255 - Y_{pos}) = C_{\max} : C_{pos} \qquad (\textit{für} \quad Y > Y_{pos})$$

wobei Ypos ein Helligkeitswert der Koordinate ist, Y die Helligkeit des Eingangs-RGB-Farbsignals ist, Cpos ein Sättigungswert der Koordinate ist und Cmax eine maximale Sättigung ist, die in einen Bereich angehoben ist, in dem die Helligkeit und der Farbton des Eingangs-RGB-Farbsignals aufrechterhalten werden.

**9.** Farbsignal-Verarbeitungsverfahren nach Anspruch 7, das des Weiteren umfasst:

Bestimmen des Bereiches anzeigbarer Helligkeit in Bezug auf ein Dreieck, das unter Verwendung der aus der Koordinaten-Speichereinheit extrahierten Koordinaten und einer Achse der Helligkeit konstruiert wird, die eine Verschiebung der Helligkeit repräsentiert, mittels

$$Y_{min} : Y_{pos} = C : C_{pos}$$
$$(255 - Y_{max}) : (255 - Y_{pos}) = C : C_{pos}$$

wobei Ypos ein Helligkeitswert der Koordinate ist, C die Sättigung des RGB-Farbsignals ist, Ymin eine minimale Helligkeit ist, die innerhalb des Bereiches abgesenkt ist, in dem der Farbton und die Sättigung des Eingangs-RGB-Farbsignals aufrechterhalten werden, und Ymax eine maximale Helligkeit ist, die innerhalb des Bereiches erhöht ist, in dem der Farbton und die Sättigung des Eingangs-RGB-Farbsignals aufrechterhalten werden.

## Revendications

**1.** Dispositif de traitement de signal en couleurs, comprenant :

une unité de calcul (41) effectuant le calcul de la luminosité, la saturation et la teinte d'un signal RVB en couleurs appliqué en entrée, comprenant la conversion du signal RVB en couleurs appliqué en entrée dans l'espace de couleurs YCbCr et le calcul de la saturation et de la teinte à partir des valeurs Cb et Cr,
une unité de mémorisation de coordonnées (43) mémorisant, pour chacun d'une pluralité de niveaux prédéterminés de la teinte H, les coordonnées d'un sommet représentant la teinte respective H, la saturation maximale Cpos(H) et la luminosité correspondante Ypos(H) d'un espace de rendu des couleurs d'affichage,
une unité de détermination (45), dans lequel l'unité de détermination extrait les coordonnées d'un sommet correspondant à la teinte calculée de l'unité de mémorisation de coordonnées et détermine une plage de luminosités pouvant être affichées à la saturation calculée sur la base des coordonnées extraites, ainsi qu'une plage de saturations pouvant être affichées à la luminosité calculée sur la base des coordonnées extraites, et elle détermine si la saturation et la luminosité calculées des signaux RVB en entrée se trouvent dans les plages pouvant être affichées,
dans lequel l'unité de détermination (45) extrait en outre une nouvelle coordonnée correspondant à la teinte calculée si la luminosité calculée et la saturation calculée du signal RVB en couleurs appliqué en entrée ne sont pas dans les plages déterminées, et elle extrait une nouvelle coordonnée jusqu'à ce que la luminosité calculée et la saturation calculée du signal RVB en couleurs appliqué en entrée se trouvent dans les plages déterminées, et
une unité de traitement du signal (47) numérisant le signal RVB en couleurs appliqué en entrée en vue d'un affichage dans les plages déterminées.

**2.** Dispositif de traitement de signal en couleurs selon la revendication 1, dans lequel l'unité de calcul effectue le calcul de la saturation et de la teinte grâce à,

$$C = \sqrt{Cb^2 + Cr^2}$$

$$H = \tan^{-1} \frac{Cb}{Cr}$$

où C est la saturation, Cb est une échelle de couleurs représentant la couleur verte, Cr est une échelle de couleurs représentant la couleur rougeâtre, et où H est la teinte.

3. Dispositif de traitement de signal en couleurs selon la revendication 2, dans lequel l'unité de détermination effectue la détermination de la plage de saturations pouvant être affichées en déterminant la saturation maximale par rapport à un triangle qui est construit en utilisant les coordonnées extraites de l'unité de mémorisation de coordonnées et un axe de luminosité représentant un décalage de la luminosité, grâce à,

$$Y : Y_{pos} = C_{max} : C_{pos} \qquad (pour \qquad Y \leq Y_{pos})$$
$$(255 - Y) : (255 - Y_{pos}) = C_{max} : C_{pos} \qquad (pour \qquad Y > Y_{pos})$$

où Ypos est la valeur de luminosité de la coordonnée, Y est la luminosité du signal RVB en couleurs appliqué en entrée, Cpos est une valeur de saturation de la coordonnée, et où Cmax est la saturation maximale qui est atteinte sur une plage qui maintient la luminosité et la teinte du signal RVB en couleurs appliqué en entrée.

4. Dispositif de traitement de signal en couleurs selon la revendication 2, dans lequel l'unité de détermination effectue la détermination de la plage de luminosités pouvant être affichées par rapport à un triangle qui est construit en utilisant les coordonnées extraites de l'unité de mémorisation de coordonnées et un axe de luminosité représentant un décalage de la luminosité, grâce à,

$$Y_{min} : Y_{pos} = C : C_{pos}$$
$$(255 - Y_{max}) : (255 - Y_{min}) = C : C_{pos}$$

où Ypos est une valeur de luminosité de la coordonnée, C est la saturation du signal RVB en couleurs appliqué en entrée, Ymin est la luminosité minimale qui est diminuée dans une plage qui maintient la teinte et la saturation du signal RVB en couleurs appliqué en entrée, et où Ymax est la luminosité maximale qui est atteinte dans la plage qui maintient la teinte et la saturation du signal RVB en couleurs appliqué en entrée.

5. Dispositif de traitement de signal en couleurs selon la revendication 1, dans lequel l'unité de calcul effectue le calcul de la luminosité correspondant au signal RVB en couleurs appliqué en entrée grâce à la relation suivante :

$$Y = 0{,}29900\ R + 0{,}58700\ G + 0{,}11400\ B$$

6. Procédé de traitement d'un signal en couleurs, comprenant :

le calcul (S501) de la luminosité, la saturation et la teinte d'un signal RVB en couleurs appliqué en entrée, comprenant la conversion du signal RVB en couleurs appliqué en entrée dans l'espace de couleurs YCbCr et le calcul de la saturation et de la teinte à partir des valeurs Cb et Cr,
la mémorisation, pour chacun d'une pluralité de niveaux prédéterminés de la teinte H, des coordonnées d'un sommet représentant la teinte respective H, la saturation maximale Cpos(H) et la luminosité correspondante Ypos(H) d'un espace de rendu des couleurs d'affichage,
la récupération (S503) des coordonnées d'un sommet correspondant à la teinte calculée,
la détermination (S505) d'une plage de luminosités pouvant être affichées à la saturation calculée sur la base des coordonnées extraites, ainsi que d'une plage de saturations pouvant être affichées à la luminosité calculée sur la base des coordonnées extraites, et la détermination (S507) de ce que la saturation et la luminosité calculées des signaux RVB en entrée se trouvent dans les plages pouvant être affichées,

l'extraction d'une nouvelle coordonnée correspondant à la teinte calculée si la luminosité calculée et la saturation calculée du signal RVB en couleurs appliqué en entrée ne sont pas dans les plages déterminées, ainsi que l'extraction d'une nouvelle coordonnée jusqu'à ce que la luminosité calculée et la saturation calculée du signal RVB en couleurs appliqué en entrée se trouvent dans les plages déterminées, et

la numérisation (S509) du signal RVB en couleurs appliqué en entrée en vue d'un affichage dans les plages déterminées.

**7.** Procédé de traitement d'un signal en couleurs selon la revendication 6, dans lequel la saturation et la teinte sont calculées en utilisant,

$$C = \sqrt{Cb^2 + Cr^2}$$

$$H = \tan^{-1} \frac{Cb}{Cr}$$

où C est la saturation, Cb est une échelle de couleurs représentant la couleur verte, Cr est une échelle de couleurs représentant la couleur rougeâtre, et où H est la teinte.

**8.** Procédé de traitement d'un signal en couleurs selon la revendication 7, comprenant en outre :

la détermination de la plage de luminosités pouvant être affichées en déterminant une saturation maximale par rapport à un triangle qui est construit en utilisant les coordonnées extraites et un axe de luminosité représentant le décalage de la luminosité, grâce à,

$$Y : Y_{pos} = C_{\max} : C_{pos} \qquad (pour \qquad Y \le Y_{pos})$$

$$(255 - Y) : (255 - Y_{pos}) = C_{\max} : C_{pos} \qquad (pour \qquad Y > Y_{pos})$$

où Ypos est une valeur de luminosité de la coordonnée, Y est la luminosité du signal RVB en couleurs appliqué en entrée, Cpos est une valeur de saturation de la coordonnée, et où Cmax est la saturation maximale qui est atteinte sur une plage qui maintient la luminosité et la teinte du signal RVB en couleurs appliqué en entrée.

**9.** Procédé de traitement d'un signal en couleurs selon la revendication 7, comprenant en outre :

la détermination de la plage de luminosités pouvant être affichées par rapport à un triangle qui est construit en utilisant les coordonnées extraites de l'unité de mémorisation de coordonnées et un axe de luminosité représentant un décalage de la luminosité, grâce à,

$$Y_{\min} : Y_{pos} = C : C_{pos}$$

$$(255 - Y_{\max}) : (255 - Y_{\min}) = C : C_{pos}$$

où Ypos est une valeur de luminosité de la coordonnée, C est la saturation du signal RVB en couleurs appliqué en entrée, Ymin est la luminosité minimale qui est diminuée dans la plage qui maintient la teinte et la saturation du signal RVB en couleurs appliqué en entrée, et où Ymax est la luminosité maximale qui est atteinte dans la plage qui maintient la teinte et la saturation du signal RVB en couleurs appliqué en entrée.

# FIG.1

# FIG.2

# FIG.3

# FIG.4

```
                    ┌──────────────────┐
                    │   COORDINATE     │ ╭── 43
                    │  STORING UNIT    │
                    └──────────────────┘
                                                        47 ╮
                              │
 RGB       ┌──────────────┐   ┌──────────────┐   ┌──────────────┐
 COLOR ───▶│ CALCULATING  │──▶│ COLOR GAMUT  │──▶│    SIGNAL     │
 SIGNAL    │    UNIT       │   │ DETERMINING  │   │ PROCESSING    │
           └──────────────┘   │    UNIT       │   │    UNIT       │
                              └──────────────┘   └──────────────┘
                 ╰── 41              ╰── 45
```

# FIG.5

```
                    ( START )
                         │
                         ▼
 S501 ──┐   ┌────────────────────────────────────┐
        │   │ CALCULATE BRIGHTNESS, CHROMA &       │
            │ HUE OF INPUT RGB COLOR SIGNAL        │
            └────────────────────────────────────┘
                         │
                         ▼
 S503 ──┐   ┌────────────────────────────────────┐
        │   │      EXTRACT COORDINATE             │◀──┐
            │ CORRESPONDING TO CALCULATED HUE     │   │
            └────────────────────────────────────┘   │
                         │                            │
                         ▼                            │
 S505 ──┐   ┌────────────────────────────────────┐   │
        │   │ DETERMINE COLOR GAMUT OF DISPLAY    │   │
            └────────────────────────────────────┘   │
                         │                            │
                         ▼                            │
              ╱────────────────────────╲             │
 S507 ──┐    ╱         DOES              ╲    N       │
        │   ╱  INPUT RGB COLOR            ╲──────────┘
            ╲ SIGNAL EXIST IN DETERMINED  ╱
             ╲     COLOR GAMUT?          ╱
              ╲────────────────────────╱
                         │ Y
                         ▼
 S509 ──┐   ┌────────────────────────────────────┐
        │   │     DIGITIZE RGB COLOR SIGNAL       │
            └────────────────────────────────────┘
                         │
                         ▼
                    (  END  )
```

# FIG.6

# FIG.7

# FIG.8

# FIG.9

# FIG.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 200213582

- US 5510910 A